# EUROPÄISCHE PATENTSCHRIFT

(11) **EP 0 891 397 B1**
(45) Veröffentlichungstag und Bekanntmachung des Hinweises auf die Patenterteilung: **24.10.2001**
(21) Anmeldenummer: 97915387.1
(22) Anmeldetag: 19.03.1997
(51) Int. Cl.: C09D 5/36, C09K 19/00, C09K 19/38

(54) **VERFAHREN ZUR HERSTELLUNG VON EFFEKTBESCHICHTUNGEN MIT VOM BETRACHTUNGSWINKEL ABHÄNGIGEM FARBEINDRUCK**
PROCESS FOR THE PRODUCTION OF EFFECT COATINGS WITH COLOUR IMPRESSION DEPENDING ON VIEWING ANGLE
PROCEDE POUR LA PRODUCTION DE REVETEMENTS A EFFETS AVEC LESQUELS LA PERCEPTION DE LA COULEUR DEPEND DE L'ANGLE D'OBSERVATION

(30) Priorität: 01.04.1996 DE 19612975
(43) Veröffentlichungstag der Anmeldung: 20.01.1999
(73) Patentinhaber: Clariant GmbH, 65929 Frankfurt am Main (DE)
(72) Erfinder: DIETZ, Erwin, D-61462 Königstein (DE); SCHÖNFELD, Axel, D-65207 Wiesbaden (DE); KREUDER, Willi, D-55126 Mainz (DE)
(86) Internationale Anmeldenummer: EP9701369
(87) Internationale Veröffentlichungsnummer: WO9736963

(56) Entgegenhaltungen:
- EP-A- 0 391 368
- EP-A- 0 699 722
- EP-A- 0 727 472
- DE-A- 4 418 075

## Beschreibung

Die Erfindung betrifft ein Verfahren zur Herstellung cholesterischer Effektbeschichtungen mit einem brillanten, vom Betrachtungswinkel abhängigen Farbeindruck.

Übliche Lacke und applizierte Lackierungen enthalten farbgebende, in einem klaren Bindemittel dispergierte Pigmente, bei denen es sich in der Regel um Absorptions- und Interferenzpigmente handelt.

Außerdem gibt es auch Effektpigmente, die aus plättchenförmigen. cholesterischen Flüssigkristall-Netzwerken (DE-A-42 40 743 und US-A-4,410,570) bestehen oder auch Effektpigmente, bei denen kleine Glimmerplättchen allseits gleichmäßig mit einem vernetzten, flüssigkristallinen Polymer in chiral-nematischer Anordnung beschichtet sind.

Die Farberscheinung derartiger flüssigkristalliner Pigmente kommt durch eine selektive Reflexion an der Helix der cholesterischen Struktur zustande. Von dem einfallenden Licht werden nur diejenigen Lichtwellen reflektiert, deren Wellenlängen mit der Ganghöhe der helikalen Überstruktur der flüssigkristallinen Polymere übereinstimmen, wogegen die Lichtanteile anderer Wellenlängen durch den klaren Lack-Körper hindurchgehen und von dem - vorzugsweise - dunklen Untergrund absorbiert werden. Derartige, plättchenförmige, parallel zur lackierten Oberfläche ausgerichtete Pigmente aus Flüssigkristall-Netzwerken haben bei orthogonaler Betrachtung eine bestimmte Farbe, die sich bei einer geneigten Betrachtungsrichtung kontinuierlich zu kürzerwelligen Farben verschiebt. Diese vom Betrachtungswinkel abhängige Farberscheinung der lackierten Oberfläche macht die Lackierung sehr effektvoll und für bestimmte Anwendungsfälle besonders wünschenswert. Nachteilig ist die aufwendige und teure Herstellung der beschriebenen Pigmente über mehrere Syntheseschritte. Außerdem von Nachteil ist die niedrige Temperaturstabilität der Flüssigkristallnetzwerke, die auf die Temperaturempfindlichkeit der Siloxane sowie des Cholesterins (chirale Komponente) zurückzuführen ist. Auch sind die aus Flüssigkristall-Netzwerken bestehenden Pigmente in vielen Lacken quellbar, was zu einer Aufweitung der Helix in der flüssigkristallinen Struktur führt. Eine solche Aufweitung der Ganghöhe der Helix hat eine Veränderung der reflektierten Farbe zur Folge. Mit zunehmender Ganghöhe werden längerwellige Farben reflektiert, und bei einem zu starken Anquellen der Helix können die reflektierten Lichtwellen außerhalb des sichtbaren Bereiches liegen, so daß keine Farbwirkung mehr auftritt. Dies bedeutet, daß solche Pigmente nicht unter den Bedingungen, wie sie zum Beispiel in der Autoserienlackierung üblich sind, verwendet werden können. Da nur ein Teil der Mesogene vernetzbare Gruppen enthält, ist bei einer nicht vollständigen Vernetzung der Flüssigkristalle außerdem zu erwarten, daß sich die Helix im Laufe der Zeit in ihrer Struktur verändert, was zu einer Änderung der Farbe, wenn nicht sogar zum Verlust derselben führt. Die Mesogene sind in der Regel mit einem cyclischen Siloxan verknüpft, welches sich bei den Anwendungstemperaturen des Pigments weit oberhalb seiner Glastemperatur befindet, so daß eine molekulare Dynamik, welche zum Abbau der helikalen Struktur führt, zu erwarten ist.

In der DE 44 16 993 A1 werden Effektlackierungen beschrieben, bei denen das Pigment ohne Bindemittel appliziert werden kann. Dies ist jedoch nach den Angaben in dieser Schrift nur mit aushärtbaren flüssigkristallinen Polymeren unter Verwendung von hochsiedenden Lösemitteln möglich. Das in der DE-A-44 16 993 beschriebene Polymer basiert auf 4-(Hydroxyphenyl)-(1-[3-hydroxy-2-methyl]-propyl)-sulfid als chiraler Komponente, welches in einer aufwendigen Synthese hergestellt werden muß. Die Flüssigkristallpolymere sind in Lösemitteln löslich, so daß auch hier Quellungsprobleme mit einem Klarlack auftreten, was ebenfalls zu einer Veränderung der Ganghöhe und somit zu einer Änderung der Coloristik führt. Es handelt sich hierbei auch nicht um Pigmente, wie sie vom Fachmann üblicherweise verstanden werden, da sie in vielen Lösemitteln löslich sind. Außerdem gestaltet sich bei diesen Systemen die genaue Farbeinstellung schwierig, da sie erst auf der lackierten Oberfläche des Gebrauchsgegenstandes erfolgt und kleine Temperaturunterschiede bereits zu deutlichen Farbtonunterschieden führen.

In der nicht-vorveröffentlichten EP-A1-0 727 472 werden nichtvernetzbare cholesterische flüssigkristalline Seitengruppenpolymere zur Effektbeschichtung von Gebrauchsgegenständen verwendet.

Aufgabe der vorliegenden Erfindung war es, einfach verarbeitbare Effektbeschichtungssysteme zu entwickeln, die die Nachteile des Standes der Technik überwinden.

Es wurde gefunden, daß Effektbeschichtungen mit einem vom Betrachtungswinkel abhängigen Farbeindruck überraschenderweise im wesentlichen aus einem oder mehreren cholesterischen flüssigkristallinen Polymeren, die nicht aushärtbar sind, aus der Lösung oder aus der Schmelze hergestellt werden können.

Gegenstand der vorliegenden Erfindung ist ein Verfahren zur Herstellung von Effektbeschichtungen mit einem vom Betrachtungswinkel abhängigen Farbeindruck, dadurch gekennzeichnet, daß mindestens ein nicht aushärtbares cholesterisches flüssigkristallines Polymer, oder mindestens ein nicht aushärtbares nematisches flüssigkristallines Polymer und mindestens ein nicht aushärtbares cholesterisches flüssigkristallines Polymer in Form einer Schmelze oder in Lösung auf das zu beschichtende Objekt aufgebracht und durch Temperaturbehandlung in einen Film mit einem vom Betrachtungswinkel abhängigen Farbeindruck überführt werden, wobei das nicht aushärtbare cholesterische flüssigkristalline Polymer ein cholesterisches flüssigkristallines Seitengruppenpolymer, ein cholesterisches flüssigkristallines Hauptkettenpolymer oder eine Kombination davon ist, und wobei das cholesterische flüssigkristalline Seitengruppenpolymer in der Hauptkette Polysiloxane, cyclische Siloxane, Polyacrylate und/oder Polymethacrylate in nicht aushärtbarer Form und in den Seitenketten mesogene Gruppen enthält, und die cholesterischen flüssigkristallinen Hauptkettenpolymere aus flüssigkristallinen Polyestern bestehen.

Unter "nicht aushärtbar" wird verstanden, daß die in Rede stehenden Polymere so beschaffen sind, daß sie keine Vernetzungsreaktionen mit sich selber oder anderen Reaktionspartnern eingehen können, wie sie beispielsweise durch lichtinduzierte Vernetzungen bei den in DE-A- 44 16 993 verwendeten Zimtsäurederivaten stattfinden können.

Unter Effekt werden in der vorliegenden Erfindung nicht nur vom Betrachtungswinkel abhängige Selektivreflexionen im sichtbaren Bereich verstanden, sondern auch Selektivreflexionen im UV- und IR-Bereich. Die letztgenannten Selektivreflexionen sind mit dem menschlichen Auge nicht wahrnehmbar, können jedoch auf einfache Weise mit Hilfe von UV- und IR-Spektrometer bestimmt werden.

Die erfindungsgemäß hergestellten Effektbeschichtungen bestehen aus cholesterischen flüssigkristallinen Polymeren (cLCPs), die eine helikale Überstruktur besitzen. Diese Überstruktur führt zum einen dazu, daß das Material nicht mehr die bei nematischen Flüssigkristallpolymeren übliche Anisotropie der mechanischen Eigenschaften aufweist. Zum anderen zeigt das Material ausgeprägte Farbeffekte. Diese beruhen auf der selektiven Reflexion des einfallenden Lichts an der helikalen Überstruktur. Die genaue Reflexionsfarbe hängt hierbei vom Betrachtungswinkel und vor allem von der Ganghöhe der Helix ab. Für jeden beliebigen Betrachtungswinkel - zum Beispiel senkrechte Aufsicht auf einen Probekörper - erscheint als Reflexionsfarbe eine Farbe mit einer Wellenlänge, die der Ganghöhe der helikalen Überstruktur entspricht. Dies bedeutet, daß das reflektierte Licht eine um so kürzere Wellenlänge hat, je kürzer die Ganghöhe der Helix ist. Die sich ausbildende Ganghöhe der Helix hängt im wesentlichen vom Anteil des chiralen Comonomers an der Gesamtzusammensetzung, der Art des Einbaus in das Polymer, des Polymerisationsgrads und der Struktur des chiralen Comonomers ("helical twisting power") ab. Außerdem zeigen viele Systeme noch eine mehr oder weniger ausgeprägte Temperaturabhängigkeit der Ganghöhe in der cholesterischen Phase und somit auch eine Variation der coloristischen Eigenschaften. Es ist ohne weiteres möglich, durch die Variation des Anteils des chiralen Comonomers beispielsweise ein Polymer mit einem blauen, grünen oder goldenen Farbeffekt herzustellen.

Verwendbar als cLCP sind erfindungsgemäß besagte cholesterische flüssigkristalline Hauptkettenpolymere als auch cholesterische flüssigkristalline Seitengruppenpolymere oder kombinierte Hauptketten-/ Seitengruppenpolymere.

Cholesterische Seitengruppenpolymere sind beispielsweise Polysiloxane, cyclische Siloxane, Polyacrylate oder Polymethacrylate in nicht aushärtbarer Form, mit Mesogenen in den Seitengruppen. Die Mesogene in der Seitengruppe können alle dem Fachmann bekannten Strukturen, wie beispielsweise mit Cholesterin substituierte Phenylbenzoate oder Biphenole enthalten.

Cholesterische Hauptkettenpolymere werden im allgemeinen aus einer chiralen Komponente sowie aus Hydroxycarbonsäuren und/oder einer Kombination von Dicarbonsäuren und Diolen hergestellt. In der Regel bestehen die Polymere im wesentlichen aus aromatischen Bestandteilen. Es ist jedoch auch möglich, aliphatische und cycloaliphatische Komponenten, wie z.B. Cyclohexandicarbonsäure, einzusetzen.

Bevorzugt im Sinne der vorliegenden Erfindung sind cholesterische flüssigkristalline Hauptkettenpolymere, bestehend im wesentlichen aus
a) O bis 99,9 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,95 Mol% mindestens einer Verbindung aus der Gruppe der aromatischen Dicarbonsäuren und cycloaliphatischen Dicarbonsäuren;
c) 0 bis 49,95 Mol% mindestens einer Verbindung aus der Gruppe der aromatischen Diole, cycloaliphatischen Diole und aromatischen Diamine;
d) 0,1 bis 40 Mol%, vorzugsweise 1 bis 25 Mol%, an chiralen, acyclischen und/oder monocyclischen bifunktionellen Comonomeren; und
e) 0 bis 5 Mol% einer verzweigbaren Komponente mit mehr als zwei funktionellen Gruppen, wobei die Summe 100 Mol% ergibt.

Bei den angegebenen Prozentsätzen ist darauf zu achten, daß die dem Fachmann bekannte Stöchiometrie der funktionellen Gruppen zur Polykondensation gewährleistet ist.
Zusätzlich können die Polymere noch Komponenten mit mehr als zwei funktionellen Gruppen, wie beispielsweise Dihydroxybenzoesäuren, Trihydroxylbenzole oder Trimellitsäure enthalten. Diese Komponenten wirken als Verzweigungsstelle im Polymer und dürfen nur in geringen Konzentrationen, beispielsweise 0 bis 5 Mol-%, zugegeben werden, um eine Vernetzung des Materials zu vermeiden.

Besonders bevorzugt sind cholesterische Hauptkettenpolymere, die aus folgenden Bausteinen der einzelnen Monomergruppen aufgebaut sind:
a) Aromatische Hydroxycarbonsäuren, Aminocarbonsäuren: 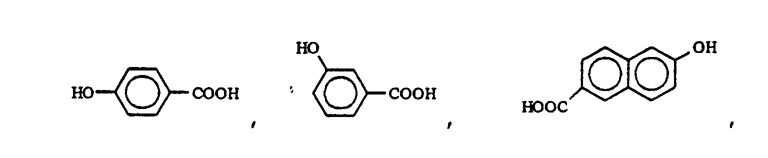 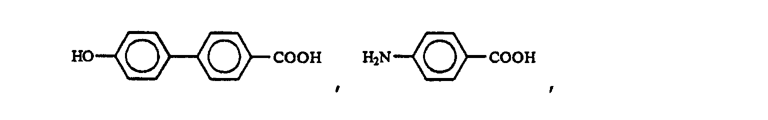 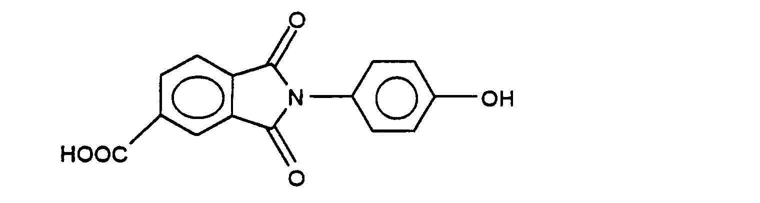
b) Aromatische Dicarbonsäuren, aliphatische Dicarbonsäuren: 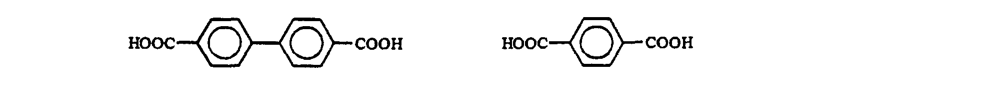 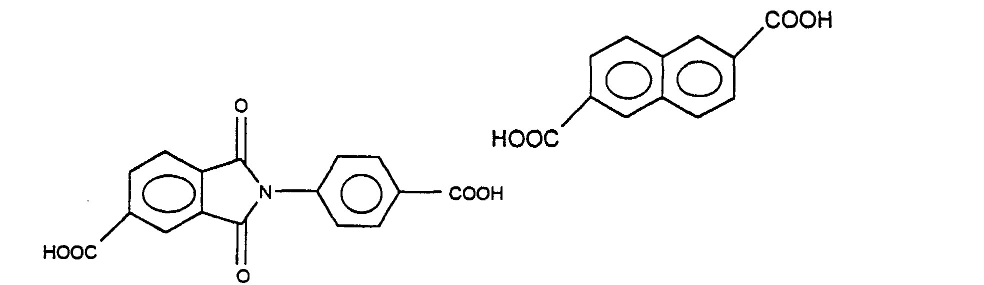 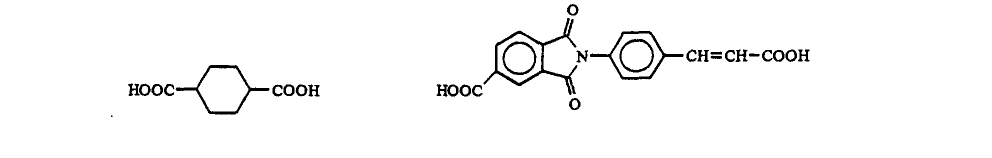 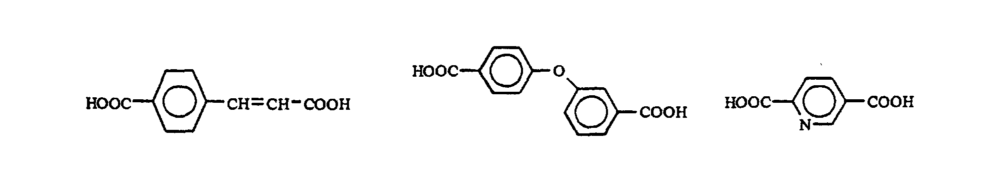 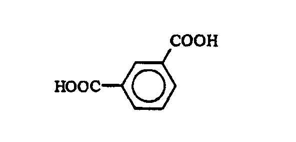
c) Aromatische Diole, Aminophenole, aromatische Diamine: 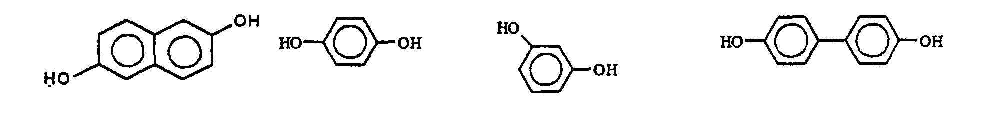 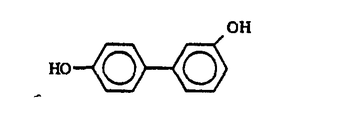 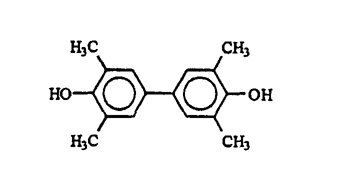 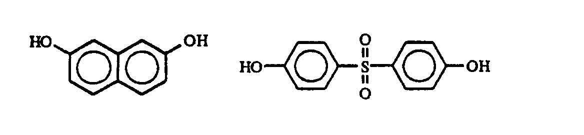 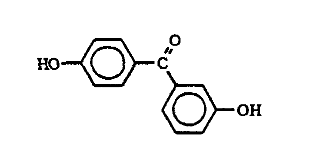 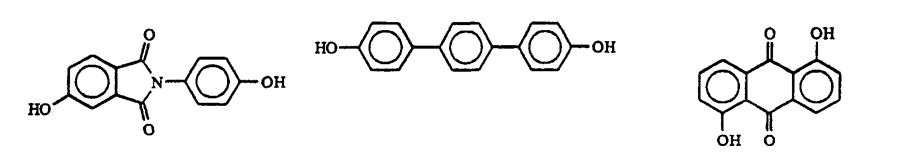 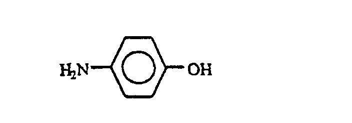 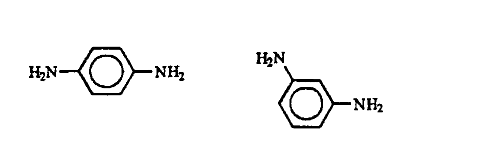
d) Chirale, bifunktionelle Monomere: 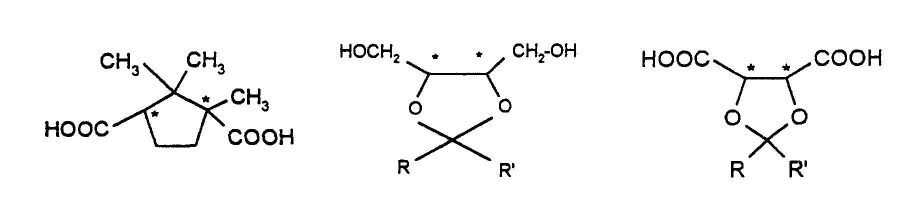 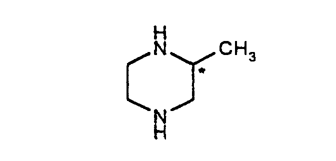 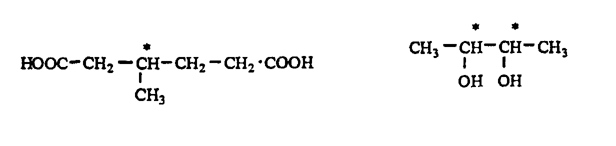 wobei R und R' jeweils unabhängig voneinander H, C₁-C₆-Alkyl oder Phenyl, vorzugsweise H oder CH₃, sind.

Insbesondere bevorzugt als cLCP sind Polymere, enthaltend Camphersäure als chirale Komponente sowie p-Hydroxybenzoesäure und/oder 2-Hydroxy-6-naphthoesäure und/oder Terephthalsäure und/oder Isophthalsäure und/oder Hydrochinon und/oder Resorcin und/oder 4,4'-Dihydroxybiphenyl und/oder 2,6-Naphthalindicarbonsäure.

Die chiralen Comonomere werden vorzugsweise in einer enantiomerenreinen Form eingesetzt. Bei Verwendung von Enantiomerengemischen eines Comonomers ist darauf zu achten, daß eine Enantiomerenform in einem wirksamen Überschuß vorhanden ist.

Die erfindungsgemäß eingesetzten Monomere können entweder direkt eingesetzt werden, oder es können auch zweckmäßige Vorstufen verwendet werden, die sich unter den nachfolgenden Reaktionsbedingungen zu den gewünschten Monomeren umsetzen. So kann beispielsweise statt N-(4-Hydroxyphenyl)trimellitimid Aminophenol und Trimellitsäureanhydrid eingesetzt werden.

Die Polykondensation kann über alle dem Fachmann bekannten Polykondensationsverfahren durchgeführt werden. Beispielsweise eignet sich die Schmelzkondensation mit Acetanhydrid, die in EP-A-0 391 368 beschrieben ist.

Bevorzugt erfolgt die Verknüpfung der Monomere über Esterbindungen (Polyester) und/oder über Amidbindungen (Polyesteramid/Polyamid), jedoch kann die Verknüpfung auch über andere dem Fachmann bekannte Verknüpfungsarten erfolgen, beispielsweise Polyesterimid.

Bei der Auswahl der Monomerbausteine ist darauf zu achten, daß die dem Fachmann bekannte Stöchiometrie der funktionellen Gruppen gewährleistet ist, d. h. daß funktionelle Gruppen, die miteinander in der Polykondensationsreaktion reagieren, in entsprechenden Verhältnissen eingesetzt werden. Beispielsweise bei Verwendung von Dicarbonsäuren und Diolen muß eine der Anzahl an Carboxylgruppen entsprechende Anzahl an Hydroxylgruppen vorhanden sein. In einer weiteren Ausführungsform ist es jedoch möglich, zur Variation des Molekulargewichts Monomere aus den Gruppen b) bis d) oder die aufgeführten Komponenten mit mehr als zwei funktionellen Gruppen in einem für die Erzielung eines definierten Molekulargewichts notwendigen Überschuß einzusetzen. Weiterhin kann das Molekulargewicht durch die Verwendung monofunktioneller Monomere beeinflußt werden.

Anstelle der Carbonsäuren können auch andere dem Fachmann bekannte Carbonsäurederivate, wie beispielsweise Säurechloride oder Carbonsäureester eingesetzt werden. Anstelle der Hydroxykomponenten können auch entsprechende Hydroxyderivate, wie beispielsweise die acetylierten Hydroxyverbindungen, eingesetzt werden.

Die beschriebenen Polymerbausteine können noch weitere Substituenten, wie beispielsweise Methyl, Methoxy oder Halogen, enthalten.

Es ist auch möglich, cholesterische flüssigkristalline Polymere durch Mischen von farblosen und/oder gefärbten nematischen und/oder cholesterischen flüssigkristallinen Polymeren herzustellen. Dabei kann der Farbton der Effektbeschichtung in weiten Grenzen variiert und exakt eingestellt werden.

Als nematische flüssigkristalline Polymere kommen insbesondere solche in Betracht, die p-Hydroxybenzoesäure und/oder 2-Hydroxy-6-naphthoesäure; 2,6-Naphthalin-dicarbonsäure, Terephthalsäure und/oder Isophthalsäure; Hydrochinon, Resorcin und/oder 4,4'-Dihydroxybiphenyl enthalten.

Bei der Verwendung von Hauptkettenpolymeren weisen die cLCPs in einer bevorzugten Ausführungsform eine sehr geringe Löslichkeit auf, so daß ihre Molekulargewichte nicht mit üblichen Methoden (GPC, Lichtstreuung) bestimmt werden können. Als Maß für das Molekulargewicht kann die intrinsische Viskosität der Polymere in einer Lösung aus Pentafluorphenol/ Hexafluorisopropanol herangezogen werden. Geeignet sind Polymere mit einer intrinsischen Viskosität zwischen 0,1 dl/g und 10 dl/g.

Die bevorzugten Hauptkettenpolymere besitzen eine hohe thermische Stabilität und aufgrund ihrer Schwerlöslichkeit eine hervorragende Stabilität gegenüber den in Lacken verwendeten Lösemitteln. Sie machen deshalb Vernetzungsreaktionen nach dem Aufbringen auf die Substratoberfläche überflüssig. Dadurch gestaltet sich nicht nur die Applikation, sondern auch die Synthese erheblich einfacher.

Zur Herstellung cholesterischer Effektbeschichtungen gibt es mehrere Möglichkeiten:

Eine bevorzugte Möglichkeit, die cholesterischen flüssigkristallinen Polymere in Effektbeschichtungen zu überführen, ist die Lösungsbeschichtung. Hierbei wird das Polymer in einem Lösemittel gelöst und aus der Lösung ein Film auf das zu beschichtende Substrat gebracht. Dies kann beispielsweise durch Spritzen, Rakeln, Gießen, Tauchen oder mit einem Pinsel geschehen. Nach dem Abdampfen des Lösemittels bildet das Polymer eine brillante Effektbeschichtung.

Eine weitere bevorzugte Möglichkeit, die cholesterischen flüssigkristallinen Polymere in Effektbeschichtungen zu überführen, ist die Schmelzbeschichtung. Hierbei wird das Polymer in der Schmelze auf das Substrat aufgezogen oder auf dem Substrat aufgeschmolzen und zu einer dünnen Schicht verarbeitet. Zum Aufbringen des Polymers eignet sich beispielsweise ein beheizbarer Rakel. Der Auftrag kann aber auch mit einfacheren Mitteln, wie beispielsweise einem Spachtel, erfolgen.

Eine weitere Möglichkeit, die cholesterischen flüssigkristallinen Polymere in Effektbeschichtungen zu überführen, ist die Pulverbeschichtung. Hierbei wird das Polymer in einem ersten Schritt mit bekannten Mahlaggregaten auf die gewünschte Kornfeinheit gemahlen. Anschließend wird das Pulver nach bekannten Methoden, wie beispielsweise Flammspritzverfahren, Coronaverfahren, triboelektrisches Verfahren oder Wirbelsinterverfahren appliziert.

Nach dem Auftragprozess auf das Objekt wird die Pulverschicht auf Temperaturen oberhalb des Erweichungspunktes des Pulvers erhitzt, bei welchen die Polymere einen homogenen Film bilden und die helikalen Überstrukturen ausbilden. Die Temperatur, bei welcher die Ausbildung der helikalen Struktur beginnt, wird im folgenden als Chiralisierungstemperatur bezeichnet.

Die speziellen optischen Eigenschaften der erfindungsgemäßen Effektbeschichtungen werden erst beobachtet, wenn die Moleküle oberhalb der Chiralisierungstemperatur des Polymeren die helikale Struktur ausbilden. Der Übergang in die cholesterische Phase erfolgt in vielen Fällen bereits bei der Synthese der Polymeren. Die Wellenlänge der Selektivreflexion der erfindungsgemäß eingesetzten cLCPs wird durch die Ganghöhe der helikalen Struktur bestimmt. Die Ganghöhe ist abhängig von der Struktur des Polymeren, der Schmelzviskosität, der Gegenwart von Lösemitteln und insbesondere von der Verdrillungskraft des chiralen Monomers ("helical twisting power"). Sie ist außerdem eine Funktion der Temperatur. Entsprechend läßt sich die Ganghöhe der Helix auch über die Temperatur einstellen. Durch schnelles Abkühlen der beschichteten Substrate läßt sich die Ganghöhe der Helix und somit die Selektivreflexion dauerhaft eingefrieren. Beim langsamen Abkühlen muß mit coloristischen Veränderungen gerechnet werden. Im allgemeinen werden auch auf diese Weise gefärbte Substrate erhalten. Es ist jedoch schwierig, die Endcoloristik vorherzubestimmen. Wird das abgekühlte Substrat erneut erhitzt, so lassen sich neue oder auch wieder die gleichen Ganghöhen der Helix und somit die Wellenlänge der Selektivreflexion einstellen. Durch diesen Vorgang kann die Coloristik des beschichteten Substrats auf einfache Weise variiert und korrigiert werden. Für die Anwendung in der Praxis ist es wichtig, daß der Schmelzpunkt und die Chiralisierungstemperatur des Polymeren oberhalb der Gebrauchstemperatur des beschichteten Substrats liegen.

Begünstigt werden kann die Ausbildung der helikalen Struktur neben der Temperatur und der Einwirkung von Scherkräften durch Untergründe mit polymeren Schichten, wie beispielsweise Polyvinylalkohol, Cellulosederivate und Polyimide. Der Orientierungsprozess der Polymermoleküle kann je nach Struktur der Polymeren auch durch elektrische und magnetische Felder positiv beeinflußt werden.

Die erfindungsgemäßen Effektbeschichtungen können auf die unterschiedlichsten Substrate aufgebracht werden. Dies können beispielsweise Gegenstände aus natürlichen und synthetischen Materialien wie beispielsweise Holz, Kunststoffe, Metall oder Glas sein. Wird die Effektbeschichtung ohne eine Vorbeschichtung aufgebracht, so empfiehlt sich ein Auftrag in einer Schichtdicke, die den Untergrund abdeckt. Es können selbstverständlich auch mehrere Schichten aufgetragen oder semitransparente Beschichtungen hergestellt werden. Besonders bevorzugt ist die Beschichtung der Karosserie oder von Karosserieteilen von Kraftfahrzeugen.

In bevorzugten Fällen wird die Pulvereffektbeschichtung auf Metall- oder Kunststoffuntergründe aufgebracht. Diese sind meistens vorbeschichtet. Das heißt, Kunststoffsubstrate können mit einer Kunststoffgrundierung versehen sein, und metallische Substrate besitzen im allgemeinen eine elektrophoretisch aufgebrachte Grundierung und gegebenenfalls eine oder mehrere weitere Lackschichten wie beispielsweise eine Füllerschicht.

Besonders bevorzugt sind dunkle Untergründe. Unter Untergrund ist in diesem Zusammenhang nicht nur ein an seiner Oberfläche mit einer dunklen Lackschicht versehenes Substrat zu verstehen, sondern auch ein in sich dunkel gefärbtes Substrat, beispielsweise ein Kunststoffsubstrat oder ein mit einer dunklen Oxidschicht überzogenes Metallsubstrat. Beispiele für dunkle Lackschichten sind elektrophoretisch oder durch Spritz- oder Pulverlackierung aufgebrachte Grundierungen, Kunststoffgrundierungen, Füller- und Steinschlagschutzschichten oder auch unifarbene Basis- und Decklackschichten. Beispiele für dunkle Untergründe sind dunkelrot, dunkelblau, dunkelgrün, dunkelbraun, dunkelgrau und insbesondere schwarz. Die Effektbeschichtungen können auch auf hellen Untergründen oder in deckenden Schichten appliziert werden. Dabei kommt jedoch der vom Betrachtungswinkel abhängige Farbeindruck nur abgeschwächt zum Ausdruck.

Die Effektbeschichtungen können nach üblichen Methoden mit einem Klarlack überzogen werden. Als Klarlack sind grundsätzlich alle bekannten Klarlacke oder transparent pigmentierten Überzugsmittel geeignet. Hierbei können sowohl lösungsmittelhaltige Einkomponenten- oder Zweikomponenten-Lacke sowie vorzugsweise wasserverdünnbare Klarlacke und Pulverlacke eingesetzt werden. In manchen Fällen kann es zweckmäßig sein, die Klarlackschicht etwas dicker zu wählen oder 2 Klarlackschichten aus gleichen oder verschiedenen Flüssigklarlacken oder Pulverklarlacken aufzutragen. Der Klarlack enthält bekannterweise weitere Hilfsstoffe, die die Oberflächeneigenschaften der beschichteten Objekte verbessern. Zu erwähnen sind beispielsweise UV-Stabilisatoren und Lichtschutzmittel, die die darunterliegenden Schichten vor Abbaureaktionen schützen.

Den Effektbeschichtungen können vor oder während der Applikation weitere Stoffe zugesetzt werden, wie sie bei Kunststoffverarbeitungs-, Lackier- und Beschichtungsverfahren üblich sind. Zu erwähnen sind beispielsweise nicht flüssigkristalline Polymere, Ladungssteuermittel, Absorptions- und Interferenzpigmente, Füllstoffe, Haftvermittler, Lichtschutzmittel, Stabilisatoren sowie Stoffe, die die Rheologie und den Verlauf beeinflussen.

Die Effektbeschichtungen lassen sich mit wenigen, einfachen Prozeßschritten, in hoher Ausbeute und ohne den Anfall eines nicht wiederverwertbaren Abfalls herstellen. Sie zeichnen sich neben der einfachen Verarbeitbarkeit durch eine hohe Temperaturstabilität, Lösemittel- und Chemikalienresistenz und sehr brillante Farbtöne mit ausgeprägter Abhängigkeit des Farbeindrucks vom Betrachtungswinkel aus.

In den nachfolgenden Beispielen bedeuten Teile Gewichtsteile.

### Beispiel 1: Synthese eines cLCP:

2821 Teile 2-Hydroxy-6-naphthoesäure, 6215 Teile 4-Hydroxy-benzoesäure, 3724 Teile 4,4'-Dihydroxibiphenyl und 3203 Teile (R)-( +)-3-Methyladipinsäure werden in einem Reaktor mit 10460 Teilen Essigsäureanhydrid versetzt und mit einem leichten Stickstoffstrom durchspült. Die Mischung wird innerhalb von 15 Minuten auf 140 °C erhitzt und diese Temperatur für 20 Minuten gehalten. Anschließend wird die Temperatur innerhalb von 150 Minuten auf 320 °C erhöht und die Schmelze 15 Minuten bei dieser Temperatur gehalten. Ab ca. 220 °C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante goldene Farbe, die bei schrägem Betrachtungswinkel grünlich erscheint.

### Beispiel 2: Synthese eines cLCP:

14110 Teile 2-Hydroxy-6-naphthoesäure, 31077 Teile 4-Hydroxy-benzoesäure, 18621 Teile 4,4'-Dihydroxibiphenyl und 3203 Teile (1R,3S)-(+)-Camphersäure werden in einem Reaktor mit 52580 Teilen Essigsäureanhydrid versetzt und mit einem leichten Stickstoffstrom durchspült. Die Mischung wird innerhalb von 15 Minuten auf 140 °C erhitzt und diese Temperatur für 20 Minuten gehalten. Anschließend wird die Temperatur innerhalb von 150 Minuten auf 330°C erhöht und die Schmelze 15 Minuten bei dieser Temperatur gehalten. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante goldene Farbe, die bei schrägem Betrachtungswinkel blaugrün erscheint.

### Beispiel 3: Beschichtung eines Metallblechs

200 mg Polymer aus Beispiel 1 werden bei 260°C in einer Schmelzpresse bei 50 bar aufgepresst. Nach dem Abkühlen erscheint das Blech mit einer sehr brillanten goldenen Farbe, die bei schrägem Anblick grün erscheint.

### Beispiel 4: Herstellung eines feinen Polymerpulvers

Das Polymer aus Beispiel 2 wird mit einer Universalmühle auf eine Korngröße < 1 mm gemahlen. Die Endmahlung erfolgt mit einer Hochleistungsultrazentrifugalmühle mit einer 0,15 mm Siebabtrennung. Es wird ein Pulver mit einer Korngröße < 150 *µ*m erhalten.

### Beispiel 5: Beschichtung von Papier

0,25 g Polymer aus Beispiel 2 werden in einer Schmelzpresse bei 220°C und einem Preßdruck von 150 bar auf ein Blatt herkömmliches Papier gepreßt. Man erhält eine sehr brillante goldene Beschichtung, welche bei schrägem Blickwinkel grünlich blau erscheint.

## Patentansprüche (Patentansprüche für folgende(n) Vertragsstaat(en): FR,GB)

1. Verfahren zur Herstellung einer Effektbeschichtung mit einem vom Betrachtungswinkel abhängigen Farbeindruck, **dadurch gekennzeichnet, daß** mindestens ein nicht aushärtbares cholesterisches flüssigkristallines Hauptketten-Polymer, oder mindestens ein nicht aushärtbares nematisches flüssigkristallines Polymer und mindestens ein nicht aushärtbares cholesterisches flüssigkristallines Hauptketten-Polymer, in Form einer Schmelze oder in Lösung auf das zu beschichtende Objekt aufgebracht und durch Temperaturbehandlung in einen Film mit einem vom Betrachtungswinkel abhängigen Farbeindruck überführt werden, wobei die cholesterischen flüssigkristallinen Hauptkettenpolymere aus flüssigkristallinen Polyestern bestehen.

2. Verfahren nach Anspruch 1, **dadurch gekennzeichnet, daß** das cholesterische flüssigkristalline Hauptkettenpolymer im wesentlichen aus
- a) 0 bis 99,9 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,95 Mol% mindestens einer Verbindung aus der Gruppe der aromatischen Dicarbonsäuren und cycloaliphatischen Dicarbonsäuren;
c) 0 bis 49,95 Mol% mindestens einer Verbindung aus der Gruppe der aromatischen Diole, cycloaliphatischen Diole und aromatischen Diamine;
d) 0,1 bis 40 Mol%, vorzugsweise 2 bis 25 Mol%, an chiralen, acyclischen und/oder monocyclischen bifunktionellen Comonomeren;
e) 0 bis 5 Mol% einer verzweigbaren Komponente mit mehr als 2 funktionellen Gruppen,
wobei die Summe 100 Mol% ergibt, besteht.

3. Verfahren nach Anspruch 2, **dadurch gekennzeichnet, daß** das chirale, bifunktionelle Comonomer eine Verbindung der Formeln 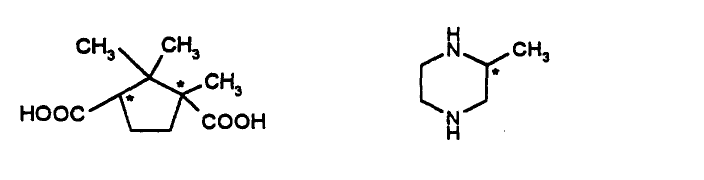 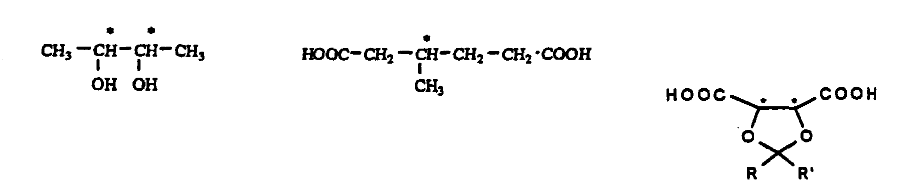 oder 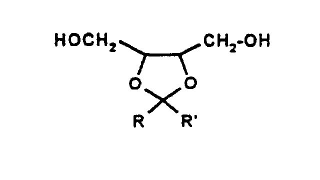 ist.

4. Verfahren nach mindestens einem der Ansprüche 1 bis 3, **dadurch gekennzeichnet, daß** weitere nicht flüssigkristalline Zusatzstoffe aus der Gruppe der Absorptions- und/oder Interferenzpigmente, Ladungssteuermittel, Füllstoffe, Haftvermittler, Lichtschutzmittel, Stabilisatoren sowie der Stoffe, die die Rheologie und den Verlauf beeinflussen, der Schmelze oder der Lösung der Polymere beigemischt werden.

5. Verfahren nach mindestens einem der Ansprüche 1 bis 4, **dadurch gekennzeichnet, daß** die nicht aushärtbaren cholesterischen flüssigkristallinen Polymere und gegebenenfalls die nicht aushärtbaren nematischen flüssigkristallinen Polymere durch Polymerisation in einer emulgierten oder dispergierten Phase in Pulverform hergestellt werden.

6. Verfahren nach einem oder mehreren der Ansprüche 1 bis 5, **dadurch gekennzeichnet, daß** die Effektbeschichtung auf einen dunklen, vorzugsweise schwarzen, Untergrund oder Grundierung aufgebracht wird.

7. Verfahren nach einem oder mehreren der Ansprüche 1 bis 6, **dadurch gekennzeichnet, daß** die Effektbeschichtung mit einem oder mehreren Klarlackschichten überzogen wird.

8. Verfahren nach mindestens einem der Ansprüche 1 bis 7, **dadurch gekennzeichnet, daß** das zu beschichtende Objekt ein Gegenstand aus Metall oder Kunststoff ist.

9. Verfahren nach Anspruch 8, **dadurch gekennzeichnet, daß** das zu beschichtende Objekt eine Karosserie oder ein Karosserieteil eines Kraftfahrzeuges ist.

## Patentansprüche (Patentansprüche für folgende(n) Vertragsstaat(en): DE)

1. Verfahren zur Herstellung einer Effektbeschichtung mit einem vom Betrachtungswinkel abhängigen Farbeindruck, **dadurch gekennzeichnet, daß** mindestens ein nicht aushärtbares cholesterisches flüssigkristallines Polymer, oder mindestens ein nicht aushärtbares nematisches flüssigkristallines Polymer und mindestens ein nicht aushärtbares cholesterisches flüssigkristallines Polymer, in Form einer Schmelze oder in Lösung auf das zu beschichtende Objekt aufgebracht und durch Temperaturbehandlung in einen Film mit einem vom Betrachtungswinkel abhängigen Farbeindruck überführt werden, wobei das nicht aushärtbare cholesterische flüssigkristalline Polymer ein cholesterisches flüssigkristallines Seitengruppenpolymer, ein cholesterisches flüssigkristallines Hauptkettenpolymer oder eine Kombination davon ist, und wobei das cholesterische flüssigkristalline Seitengruppenpolymer in der Hauptkette Polysiloxane, cyclische Siloxane, Polyacrylate und/oder Polymethacrylate in nicht aushärtbarer Form und in den Seitenketten mesogene Gruppen enthält, und die cholesterischen flüssigkristallinen Hauptkettenpolymere aus flüssigkristallinen Polyestern bestehen.

2. Verfahren nach Anspruch 1, **dadurch gekennzeichnet, daß** das cholesterische flüssigkristalline Hauptkettenpolymer im wesentlichen aus
a) 0 bis 99,9 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,95 Mol% mindestens einer Verbindung aus der Gruppe der aromatischen Dicarbonsäuren und cycloaliphatischen Dicarbonsäuren;
c) 0 bis 49,95 Mol% mindestens einer Verbindung aus der Gruppe der aromatischen Diole, cycloaliphatischen Diole und aromatischen Diamine;
d) 0,1 bis 40 Mol%, vorzugsweise 2 bis 25 Mol%, an chiralen, acyclischen und/oder monocyclischen bifunktionellen Comonomeren;
e) 0 bis 5 Mol% einer verzweigbaren Komponente mit mehr als 2 funktionellen Gruppen,
wobei die Summe 100 Mol% ergibt, besteht.

3. Verfahren nach Anspruch 2, **dadurch gekennzeichnet, daß** das chirale, bifunktionelle Comonomer eine Verbindung der Formeln 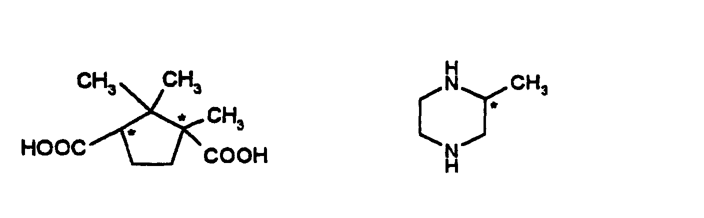 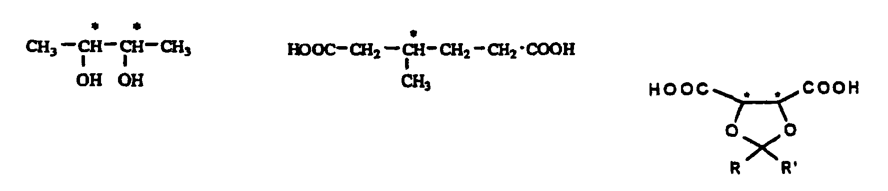 oder 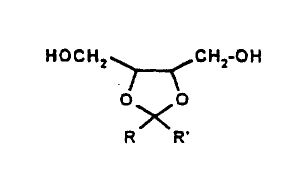 ist.

4. Verfahren nach mindestens einem der Ansprüche 1 bis 3, **dadurch gekennzeichnet, daß** weitere nicht flüssigkristalline Zusatzstoffe aus der Gruppe der Absorptions- und/oder Interferenzpigmente, Ladungssteuermittel, Füllstoffe. Haftvermittler, Lichtschutzmittel, Stabilisatoren sowie der Stoffe, die die Rheologie und den Verlauf beeinflussen, der Schmelze oder der Lösung der Polymere beigemischt werden.

5. Verfahren nach mindestens einem der Ansprüche 1 bis 4, **dadurch gekennzeichnet, daß** die nicht aushärtbaren cholesterischen flüssigkristallinen Polymere und gegebenenfalls die nicht aushärtbaren nematischen flüssigkristallinen Polymere durch Polymerisation in einer emulgierten oder dispergierten Phase in Pulverform hergestellt werden.

6. Verfahren nach einem oder mehreren der Ansprüche 1 bis 5, **dadurch gekennzeichnet, daß** die Effektbeschichtung auf einen dunklen, vorzugsweise schwarzen, Untergrund oder Grundierung aufgebracht wird.

7. Verfahren nach einem oder mehreren der Ansprüche 1 bis 6, **dadurch gekennzeichnet, daß** die Effektbeschichtung mit einem oder mehreren Klarlackschichten überzogen wird.

8. Verfahren nach mindestens einem der Ansprüche 1 bis 7, **dadurch gekennzeichnet, daß** das zu beschichtende Objekt ein Gegenstand aus Metall oder Kunststoff ist.

9. Verfahren nach Anspruch 8, **dadurch gekennzeichnet, daß** das zu beschichtende Objekt eine Karosserie oder ein Karosserieteil eines Kraftfahrzeuges ist.

## Claims (Claims for the following Contracting State(s): FR GB)

1. A process for preparing an effect coating having a perceived color which is dependent on the viewing angle, which comprises applying at least one non-curable cholesteric liquid-crystalline main-chain polymer, or at least one non-curable nematic liquid-crystalline polymer and at least one non-curable cholesteric liquid-crystalline main-chain polymer, in the form of a melt or in solution, to the article that is to be coated, and converting the applied polymer by temperature treatment into a film having a perceived color which is dependent on the viewing angle, the cholesteric liquid-crystalline main-chain polymers consisting of liquid-crystalline polyesters.

2. The process as claimed in claim 1, wherein the cholesteric liquid-crystalline main-chain polymer consists essentially of
a) from 0 to 99.9 mol% of at least one compound from the group consisting of aromatic hydroxycarboxylic acids, cycloaliphatic hydroxycarboxylic acids and aromatic aminocarboxylic acids;
b) from 0 to 49.95 mol% of at least one compound from the group consisting of aromatic dicarboxylic acids and cycloaliphatic dicarboxylic acids;
c) from 0 to 49.95 mol% of at least one compound from the group consisting of aromatic diols, cycloaliphatic diols and aromatic diamines;
d) from 0.1 to 40 mol%, preferably from 2 to 25 mol%, of chiral, acyclic and/or monocyclic bifunctional comonomers; and
e) from 0 to 5 mol% of a branchable component having more than 2 functional groups,
the sum adding up to 100 mol%.

3. The process as claimed in claim 2, wherein the chiral, bifunctional comonomer is a compound of the formula 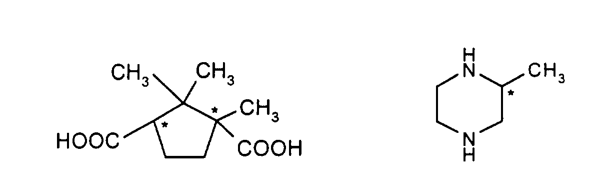 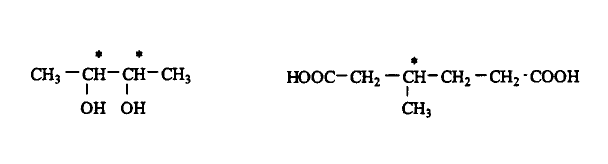 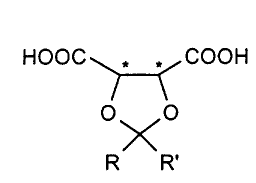 or

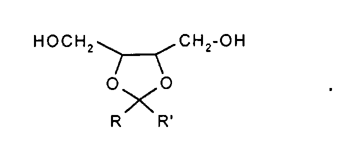

4. The process as claimed in at least one of claims 1 to 3, wherein further additives that are not liquid-crystalline are admixed to the melt or to the solution of the polymers, these additives being from the group consisting of absorption pigments and/or interference pigments, charge control agents, fillers, adhesion promoters, light stabilizers, other stabilizers, and substances which influence the rheology and leveling.

5. The process as claimed in at least one of claims 1 to 4, wherein the non-curable cholesteric liquid-crystalline polymers and, if desired, the non-curable nematic liquid-crystalline polymers are prepared in powder form by polymerization in an emulsified or dispersed phase.

6. The process as claimed in one or more of claims 1 to 5, wherein the effect coating is applied to a dark, preferably black, substrate background or primer.

7. The process as claimed in one or more of claims 1 to 6, wherein the effect coating is coated with one or more clearcoat films.

8. The process as claimed in at least one of claims 1 to 7, wherein the article to be coated is made of metal or plastic.

9. The process as claimed in claim 8, wherein the article to be coated is the bodywork, or a bodywork part, of a motor vehicle.

## Claims (Claims for the following Contracting State(s): DE)

1. A process for preparing an effect coating having a perceived color which is dependent on the viewing angle, which comprises applying at least one non-curable cholesteric liquid-crystalline polymer, or at least one non-curable nematic liquid-crystalline polymer and at least one non-curable cholesteric liquid-crystalline polymer, in the form of a melt or in solution, to the article that is to be coated, and converting the applied polymer by temperature treatment into a film having a perceived color which is dependent on the viewing angle, the non-curable cholesteric liquid-crystalline polymer being a cholesteric liquid-crystalline side-group polymer, a cholesteric liquid-crystalline main-chain polymer or a combination thereof, and the cholesteric liquid-crystalline side-group polymer comprising polysiloxanes, cyclic siloxanes, polyacrylates and/or polymethacrylates in non-curable form in the main chain and mesogenic groups in the side chains, and the cholesteric liquid-crystalline main-chain polymers consisting of liquid-crystalline polyesters.

2. The process as claimed in claim 1, wherein the cholesteric liquid-crystalline main-chain polymer consists essentially of
a) from 0 to 99.9 mol% of at least one compound from the group consisting of aromatic hydroxycarboxylic acids, cycloaliphatic hydroxycarboxylic acids and aromatic aminocarboxylic acids;
b) from 0 to 49.95 mol% of at least one compound from the group consisting of aromatic dicarboxylic acids and cycloaliphatic dicarboxylic acids;
c) from 0 to 49.95 mol% of at least one compound from the group consisting of aromatic diols, cycloaliphatic diols and aromatic diamines;
d) from 0.1 to 40 mol%, preferably from 2 to 25 mol%, of chiral, acyclic and/or monocyclic bifunctional comonomers; and
e) from 0 to 5 mol% of a branchable component having more than 2 functional groups,
the sum adding up to 100 mol%.

3. The process as claimed in claim 2, wherein the chiral, bifunctional comonomer is a compound of the formula 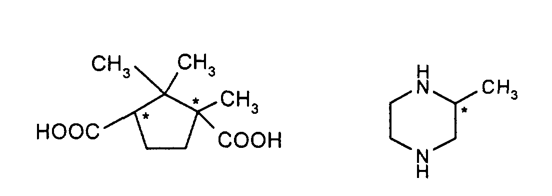 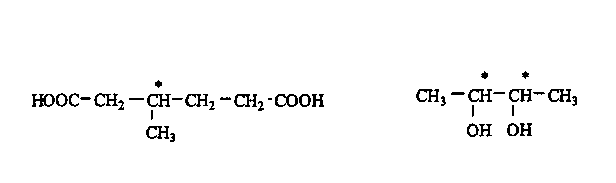 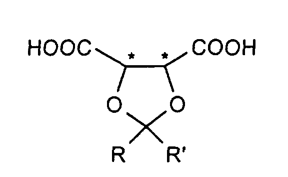 or

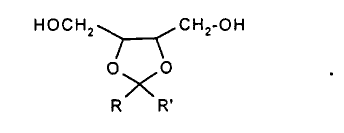

4. The process as claimed in at least one of claims 1 to 3, wherein further additives that are not liquid-crystalline are admixed to the melt or to the solution of the polymers, these additives being from the group consisting of absorption pigments and/or interference pigments, charge control agents, fillers, adhesion promoters, light stabilizers, other stabilizers, and substances which influence the rheology and leveling.

5. The process as claimed in at least one of claims 1 to 4, wherein the non-curable cholesteric liquid-crystalline polymers and, if desired, the non-curable nematic liquid-crystalline polymers are prepared in powder form by polymerization in an emulsified or dispersed phase.

6. The process as claimed in one or more of claims 1 to 5, wherein the effect coating is applied to a dark, preferably black, substrate background or primer.

7. The process as claimed in one or more of claims 1 to 6, wherein the effect coating is coated with one or more clearcoat films.

8. The process as claimed in at least one of claims 1 to 7, wherein the article to be coated is made of metal or plastic.

9. The process as claimed in claim 8, wherein the article to be coated is the bodywork, or a bodywork part, of a motor vehicle.

## Revendications (Revendications pour l'(les) Etat(s) contractant(s) suivant(s): FR, GB)

1. Procédé de préparation d'un revêtement à effet présentant une perception de couleur dépendant de l'angle d'observation, **caractérisé en ce qu'**on applique au moins un polymère à cristaux liquides cholestériques à chaîne principale, non durcissable, ou au moins un polymère à cristaux liquides nématiques non durcissable et au moins un polymère à cristaux liquides cholestériques à chaîne principale non durcissable, sous forme de matière fondue ou de solution à l'objet à revêtir et on transforme par traitement thermique en un film présentant une perception de couleur dépendant de l'angle d'observation, où
les polymères à cristaux liquides cholestériques à chaîne principale sont constitués par des polyesters à cristaux liquides.

2. Procédé selon la revendication 1, **caractérisé en ce que** le polymère à cristaux liquides cholestériques à chaîne principale est constitué essentiellement
a) de 0 à 99,9 % molaires d'au moins un composé pris dans le groupe des acides hydroxycarboxyliques aromatiques, des acides hydroxycarboxyliques cycloaliphatiques et des acides aminocarboxyliques aromatiques ;
b) de 0 à 49,95 % d'au moins un composé pris dans le groupe des acides dicarboxyliques aromatiques et acides dicarboxyliques cycloaliphatiques ;
c) de 0 à 49,95 % d'au moins un composé pris dans le groupe des diols aromatiques, diols cycloaliphatiques et diamines aromatiques ;
d) de 0,1 à 40 % molaires, de préférence de 1 à 25 % molaires, de comonomères bifonctionnels chiraux, acycliques et/ou monocycliques ;
e) de 0 à 5 % molaires d'un constituant ramifiable possédant plus de deux groupes fonctionnels, la somme donnant 100 % molaires.

3. Procédé selon la revendication 2, **caractérisé en ce que** le comonomère chiral bifonctionnel est un composé de formules 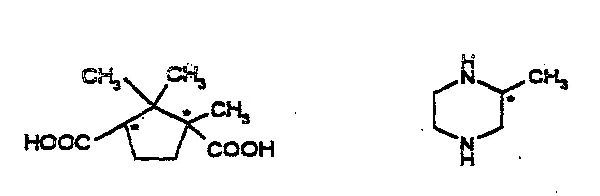 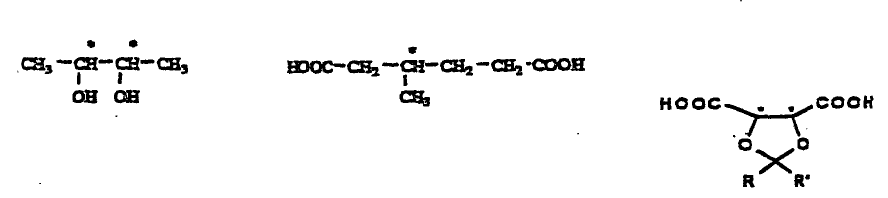 ou

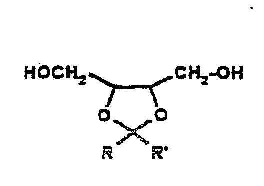

4. Procédé selon au moins l'une des revendications 1 à 3, **caractérisé en ce qu'**on mélange d'autres matières d'addition, qui ne sont pas des cristaux liquides, prises dans le groupe des pigments d'absorption et/ou d'interférence, des agents de contrôle de charge, des charges, des agents d'accrochage, des agents photoprotecteurs, des stabilisants ainsi que des matières qui influencent la rhéologie et l'écoulement, à la matière fondue ou à la solution des polymères.

5. Procédé selon au moins l'une des revendications 1 à 4, **caractérisé en ce que** les polymères à cristaux liquides cholestériques non durcissables et éventuellement les polymères à cristaux liquides nématiques non durcissables sont préparés sous forme de poudre par polymérisation en une phase émulsionnée ou dispersée.

6. Procédé selon une ou plusieurs des revendications 1 à 5, **caractérisé en ce qu'**on applique le revêtement à effet sur un subjectile ou peinture d'apprêt foncés, de préférence noirs.

7. Procédé selon une ou plusieurs des revendications 1 à 6, **caractérisé en ce que** le revêtement à effet est revêtu d'une ou plusieurs couches de vernis clair.

8. Procédé selon au moins l'une des revendications 1 à 7, **caractérisée en ce que** l'objet à revêtir est un objet en métal ou en matières plastiques.

9. Utilisation selon la revendication 8, **caractérisée en ce que** l'objet à revêtir est une carrosserie ou une pièce de carrosserie d'un véhicule automobile.

## Revendications (Revendications pour l'(les) Etat(s) contractant(s) suivant(s): DE)

1. Procédé de préparation d'un revêtement à effet présentant une perception de couleur dépendant de l'angle d'observation, **caractérisé en ce qu'**on applique au moins un polymère à cristaux liquides cholestériques non durcissable, ou au moins un polymère à cristaux liquides nématiques. non durcissable et au moins un polymère à cristaux liquides cholestériques non durcissable, sous forme de matière fondue ou de solution à l'objet à revêtir et on transforme par traitement thermique en un film présentant une perception de couleur dépendant de l'angle d'observation, où
le polymère à cristaux liquides cholestériques non durcissable est un polymère à cristaux liquides cholestériques à groupements latéraux, un polymère à cristaux liquides cholestériques à chaîne principale ou une combinaison de ces polymères, et
le polymère à cristaux liquides cholestériques à groupements latéraux présente dans la chaîne principale des groupes polysiloxanes, siloxanes cycliques, polyacrylates et/ou polyméthacrylates sous forme non durcissable et dans les chaînes latérales des groupes mésogènes, et
les polymères à cristaux liquides cholestériques à chaîne principale sont constitués par des polyesters à cristaux liquides.

2. Procédé selon la revendication 1, **caractérisé en ce que** le polymère à cristaux liquides cholestériques à chaîne principale est constitué essentiellement
a) de 0 à 99,9 % molaires d'au moins un composé pris dans le groupe des acides hydroxycarboxyliques aromatiques, des acides hydroxycarboxyliques cycloaliphatiques et des acides aminocarboxyliques aromatiques ;
b) de 0 à 49,95 % d'au moins un composé pris dans le groupe des acides dicarboxyliques aromatiques et acides dicarboxyliques cycloaliphatiques ;
c) de 0 à 49,95 % d'au moins un composé pris dans le groupe des diols aromatiques, diols cycloaliphatiques et diamines aromatiques ;
d) de 0,1 à 40 % molaires, de préférence de 1 à 25 % molaires, de comonomères bifonctionnels chiraux, acycliques et/ou monocycliques ;
e) de 0 à 5 % molaires d'un constituant ramifiable possédant plus de deux groupes fonctionnels, la somme donnant 100 % molaires.

3. Procédé selon la revendication 2, **caractérisé en ce que** le comonomère chiral bifonctionnel est un composé de formules 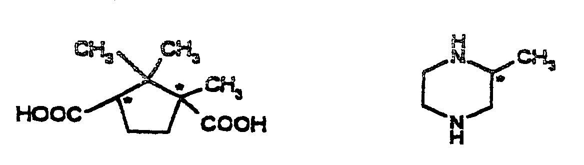 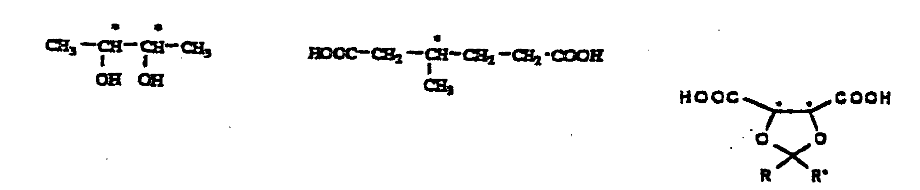 ou

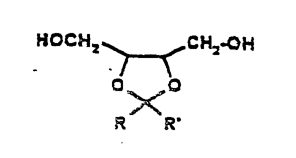

4. Procédé selon au moins l'une des revendications 1 à 3, **caractérisé en ce qu'**on mélange d'autres matières d'addition, qui ne sont pas des cristaux liquides, prises dans le groupe des pigments d'absorption et/ou d'interférence, des agents de contrôle de charge, des charges, des agents d'accrochage, des agents photoprotecteurs, des stabilisants ainsi que des matières qui influencent la rhéologie et l'écoulement, à la matière fondue ou à la solution des polymères.

5. Procédé selon au moins l'une des revendications 1 à 4, **caractérisé en ce que** les polymères à cristaux liquides cholestériques non durcissables et éventuellement les polymères à cristaux liquides nématiques non durcissables sont préparés sous forme de poudre par polymérisation en une phase émulsionnée ou dispersée.

6. Procédé selon une ou plusieurs des revendications 1 à 5, **caractérisé en ce qu'**on applique le revêtement à effet sur un subjectile ou peinture d'apprêt foncés, de préférence noirs.

7. Procédé selon une ou plusieurs des revendications 1 à 6, **caractérisé en ce que** le revêtement à effet est revêtu d'une ou plusieurs couches de vernis clair.

8. Procédé selon au moins l'une des revendications 1 à 7, **caractérisée en ce que** l'objet à revêtir est un objet en métal ou en matières plastiques.

9. Utilisation selon la revendication 8, **caractérisée en ce que** l'objet à revêtir est une carrosserie ou une pièce de carrosserie d'un véhicule automobile.
